(19) Europäisches Patentamt
European Patent Office
Office européen des brevets

(11) **EP 4 451 040 A1**

(12) **EUROPEAN PATENT APPLICATION**
published in accordance with Art. 153(4) EPC

(43) Date of publication:
**23.10.2024 Bulletin 2024/43**

(21) Application number: **22907100.6**

(22) Date of filing: **11.11.2022**

(51) International Patent Classification (IPC):
***G02B 27/01*** (2006.01)

(52) Cooperative Patent Classification (CPC):
**G02B 27/01**

(86) International application number:
**PCT/JP2022/042041**

(87) International publication number:
**WO 2023/112569 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2021 JP 2021202695**

(71) Applicants:
• **Yazaki Corporation**
**Minato-ku**
**Tokyo, 108-0075 (JP)**

• **MCC Advanced Moldings Co., Ltd.**
**Tokyo 100-8251 (JP)**

(72) Inventors:
• **MIKAMI, Hirofumi**
**Makinohara-shi, Shizuoka 421-0407 (JP)**
• **MIZUTANI, Kazunobu**
**Tokyo 100-8251 (JP)**
• **MOCHIDA, Mitsunori**
**Tokyo 100-8251 (JP)**

(74) Representative: **Hoffmann Eitle**
**Patent- und Rechtsanwälte PartmbB**
**Arabellastraße 30**
**81925 München (DE)**

(54) **REFLECTION COMBINER FOR HEAD-UP DISPLAY DEVICE AND HEAD-UP DISPLAY DEVICE**

(57) A reflective combiner for a head-up display device, the combiner including: a substrate (a); a reflective layer (b); and a translucent layer (c) having a thickness of 0.005 to 0.7 mm. A reflectance of the combiner is 10% to 55% at four wavelengths of 400 nm, 500 nm, 600 nm, and 660 nm. A transmittance of the combiner is preferably 10% or less over an entire wavelength λ range of 390 to 660 nm.

[Fig.1]

Fig.1

EP 4 451 040 A1

**Description**

Technical Field

The present invention relates to a combiner, which is an optical display member for use in an in-vehicle head-up display (HUD) device or the like, and to a head-up display device including the combiner.

A head-up display is a display which projects information into the field of view of a person in a driver's seat, overlapping and blending the information with a scene in front of them. Such a head-up display projects an image onto an automotive windshield or a combiner. The present invention relates to a reflective combiner which is not of the type that shows therethrough a scene in front of it.

Background Art

In an in-vehicle head-up display device using a combiner, a display image from a display, including a light source, is projected onto a combiner via a necessary optical system, and the image is reflected by the combiner toward a passenger's (driver's) eye position, thereby forming the display image at a position forward of the combiner (Patent Literatures 1 and 2). The display image includes, for example, a driving speed, an engine speed, various warning lamps, and a navigation function.

The combiners of Patent Literatures 1 and 2 are almost transparent. Therefore, a passenger in a vehicle views a superimposed image consisting of an image of a scene in front of the vehicle, which is seen through such a combiner, and a display image optically reflected from the combiner.

As described in Patent Literature 2, in the case of a transparent plate-like combiner, light is reflected at both the front and back surfaces of the combiner, resulting in a "double vision" display image. This reduces display visibility and display quality. The "double vision" is more pronounced as the thickness of such a plate-like combiner increases.

In the combiners of Patent Literatures 1 and 2, their surfaces are subjected to an anti-reflection treatment in order to reduce double vision. However, the anti-reflection treatment leads to increased cost.

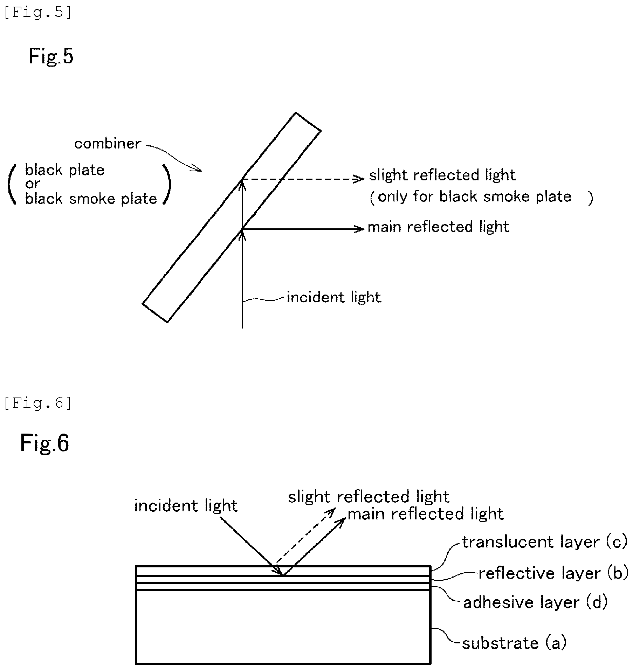

Patent Literature 3 describes a combiner using an opaque black plate or a translucent black smoke plate as shown in FIG. 5.

The combiner using a black plate or a black smoke plate achieves a high display brightness and a clear outline of an image. Further, the combiner using a black plate or a black smoke plate has a low background brightness, and therefore produces a large difference in brightness (contrast) between a display image and the background. This makes it possible to provide an easily visible display regardless of the brightness outside a vehicle, conditions of exterior light, etc.

Further, the use of an opaque black plate or a translucent black smoke plate for the combiner reduces the reflection of light at the back surface of the combiner. This can obscure a double image (double vision) that occurs in a transparent combiner due to misalignment and overlap between reflection at the front surface of the combiner and reflection at the back surface.

This eliminates the need for a countermeasure, such as a surface treatment of the combiner, to prevent double image (double vision), and therefore can reduce cost.

While a common combiner increases the surface reflectance to about 30% to 60% by providing an expensive half mirror or applying a reflection-enhancing coating such as a multilayer dielectric coating to the reflective surface, the combiner of Patent Literature 3 maintains a low surface reflectance (e.g., about 7%) by not applying a reflection-enhancing coating or the like.

In the case of a transparent combiner, in order to compensate for the difference in brightness (contrast) between a display image and the background and to thereby ensure visibility, it is necessary to increase the surface reflectance of the combiner by subjecting the reflective surface of the combiner to a surface treatment such as the application of an expensive reflection-enhancing coating. On the other hand, in the case of a combiner using a black plate or a black smoke plate, sufficient visibility can be ensured due to the difference in brightness. This can eliminate the need for a surface treatment of the reflective surface of the combiner, such as the application of an expensive reflection-enhancing coating.

The elimination of a reflection-enhancing coating can reduce the cost of the combiner and a head-up display device.

[Technical Problems of Conventional Combiner]

The above-described conventional combiner has the following technical problems.

<Increase in the Amount of Light-Source Light>

The combiner using a black plate or a black smoke plate, described in Patent Literature 3, has the advantage that a head-up display device using the combiner produces a large difference in brightness (contrast), and therefore can ensure sufficient visibility. In order to achieve this effect, it is necessary to make the brightness of light of a display or a light source sufficiently high.

However, the increase in the brightness of light of a display or a light source increases the power consumption of the light source and, in addition, increases the temperature of a head-up display device, which may adversely affect optical components and electronic components of the device.

<Need to Increase Reflectance>

In order to ensure visibility while reducing the brightness of a display or a light source to a level which is acceptable in light of the problems of power and heat generation, it is required to increase the reflectance of the combiner using a black plate or a black smoke plate.

<Need to Increase Refractive Index>

The optical reflectance of a black plate or a black smoke plate depends on the refractive index of the plate material unless the plate is subjected to a surface treatment such as the formation of a reflective layer, including a reflection-enhancing coating. Thus, in order to increase the reflectance of a combiner, it is necessary to increase the refractive index.

A combiner is generally formed of glass or a resin, or a composite material thereof. The refractive index n of a resin is generally 1.35 to 1.65, and generally does not exceed 1.7. The refractive index n of glass is generally 1.45 to 1.95, and generally does not exceed 2.0. For example, the refractive index of a PC (polycarbonate) resin is about 1.58, and the surface reflectance is about 5%.

Patent Literature 3 states that "a low surface reflectance is maintained by not performing a reflection-enhancing coating or the like". The literature discloses that the reflectance of the combiner is, for example, about 7%. The combiner, having a reflectance of about 7%, has a refractive index of about 1.7.

The reflectance R of a plate can be determined by the following equation when the refractive index of air in contact with a light entrance surface is assumed to be 1:

$$R = \{(1 - n)/(1 + n)\}^2$$

where n is the refractive index of the plate.

For example, the reflectance is about 0.11 (11%) when the refractive index is 2.0, about 0.20 (20%) when the refractive index is 2.6, and about 0.25 (25%) when the refractive index is 3.0.

In the case of a colorless transparent polycarbonate (PC) plate having a thickness of less than or equal to several mm, reflection of light occurs at the front surface and the back surface; therefore, the plate will have a measured reflectance of about 10%. In the case of a translucent PC plate, the reflectance depends on the transparency and will be in the range of about 5 to 10%.

In order for a combiner to have a reflectance of 10% or more, it is necessary to use a combiner plate having a refractive index of 2.0 or more. To achieve such a reflectance is impossible with a common resin. If some very limited special glass can achieve such a reflectance, the material will be costly.

To achieve a reflectance of 20% or more, or even 25% or more is almost impossible unless the plate is subjected to a surface treatment such as the formation of a reflective layer, including a reflection-enhancing coating.

<Dependence on Incident Angle and Polarization>

The above-described relationship between the reflectance and the refractive index of a combiner plate is an example in the case of low incident angle and non-polarization (random light). Strictly speaking, the reflectance depends not only on the refractive index but also on the incident angle and polarization (s-polarization, p-polarization) of light, and on the wavelength.

The reflectance of non-polarized light (random light) increases qualitatively as the incident angle increases to or beyond a certain incident angle. However, to position a combiner such that the incident angle exceeds 45° or even 60° can be impractical in view of the structure of a head-up display device.

Compared to non-polarized light (random light), in the case of s-polarized light, the increase in the reflectance with increase in the incident angle is remarkable (while the reflectance at normal incidence at an incident angle of 0° is the same as that of non-polarized light).

However, as described above, it is difficult to position a combiner at a high incident angle in a head-up display device. In addition, when a person wears polarized sunglasses (polarized sunglasses are based on the principle of blocking only the s-polarization component of sunlight reflected e.g. from a bonnet) in a driver's seat, light (display image) from the combiner is almost invisible.

In the case of p-polarized light, the reflectance decreases with increase in the incident angle and reaches zero at a certain angle (Brewster's angle), and the reflectance then increases with increase in the incident angle (while the reflectance at normal incidence at an incident angle of 0° is the same as that of non-polarized light). Thus, the positioning of the combiner, to be made in consideration of the incident angle, is very limited and impractical.

The Brewster's angle $\theta$ and the refractive index n satisfy the relation $\tan\theta = n$. For example, the refractive index of a PC (polycarbonate) resin is about 1.58, and the Brewster's angle is about 58°.

Thus, in the case of p-polarized light, the reflectance decreases with increase in the incident angle in the range of 0° to 58°, and becomes zero at about 58°. Thus, in this range, the lower the incident angle, the higher the reflectance. However, when compared under the same incident angle conditions, the reflectance of p-polarized light is always lower than that of non-polarized light.

As will be appreciated from the foregoing, in the case of a combiner using a black plate or a black smoke plate, unless the plate is subjected to a surface treatment such as the formation of a reflective layer, including a reflection-enhancing coating, it is difficult to select a plate material having a refractive index of 2.0 or more even when selection and adjustment are made on incident angle and polarization (s-polarization, p-polarization). Therefore, it is difficult to achieve a reflectance of 10% or more, and it is impossible to achieve a reflectance of 20% or more, or 25% or more.

Therefore, it is necessary to make the brightness of light-source light in a head-up display device sufficiently high, which poses the problems of power consumption and heat generation.

When a common reflective mirror that looks silver to increase reflectance is used, light from outside a vehicle will also be reflected, making it hard to see a display image. There is, therefore, a need for a combiner whose reflectance can be adjusted within a certain range, for example, 10% to 55%.

Citation List

Patent Literature

Patent Literature 1: JP H8-11580 A
Patent Literature 2: Japanese Patent No. 6,549,817
Patent Literature 3: Japanese Patent No. 6,300,738

Summary of Invention

Technical Problem

It is an object of the present invention to provide a combiner for a head-up display device, whose reflectance can be adjusted within a predetermined range, and a head-up display device including the combiner.

Solution to Problem

To achieve the above object, the present invention is embodied as follows.
[1] A reflective combiner for a head-up display device, the combiner comprising:

a substrate (a);
a reflective layer (b); and
a translucent layer (c) having a thickness of 0.005 to 0.7 mm,
wherein a reflectance of the combiner is 10% to 55% at four wavelengths of 400 nm, 500 nm, 600 nm, and 660 nm.

[2] The reflective combiner for a head-up display device according to [1], wherein a transmittance of the combiner is 10% or less over an entire wavelength $\lambda$ range of 390 to 660 nm.

[3] The reflective combiner for a head-up display device according to [1] or [2], wherein the reflective layer (b) is an aluminum or aluminum alloy layer.

[4] The reflective combiner for a head-up display device according to any one of [1] to [3], wherein a pencil hardness on a projection display surface is F or higher.

[5] A head-up display device comprising the reflective combiner for a head-up display device according to any one of [1] to [3] .

Advantageous Effects of Invention

In a combiner using a black plate or a black smoke plate as described in Patent Literature 3, light is reflected by the front-side surface of the plate. On the other hand, in the combiner of the present invention, light (incident light) passes through a translucent layer (c) and is reflected by a reflective layer (b), and then passes through the translucent layer (c) again and becomes reflected light.

The transmittance of the translucent layer (c) can be adjusted by adjusting the concentration of a coloring additive such as a black pigment, contained in the translucent layer (c), and the thickness of the translucent layer. This enables adjustment of the reflectance of the combiner.

According to the combiner of the present invention, the reflectance can be adjusted in the range of 10% to 55%. Therefore, a display image can be displayed with high brightness and clear outline. Further, the combiner can produce a large difference in brightness (contrast) between a display image and the background of low brightness, thereby ensuring sufficient visibility. Furthermore, it is not necessary to increase the amount of light of a display or a light source, thus making it possible to reduce power consumption and heat generation.

It is possible that main reflected light, reflected from the surface of the reflective layer (b) at a reflectance of tens of percent (10% to 55%) or less, may overlap with slight reflected light, reflected from the surface of the translucent layer (c) at a reflectance of a few percent. Such overlap and misalignment between the reflections may cause double image (double vision). However, the image misalignment can be reduced to, for example, about 1 mm or less at an incident angle of 45° by making the thickness of the translucent layer (c) 0.7 mm or less. Also because of the large difference in reflectance between the reflections, it is possible to obscure the double image (double vision). The double image (double vision) can be made almost invisible by making the translucent layer (c) sufficiently thin.

Brief Description of Drawings

[FIG. 1] FIG. 1 is a schematic cross-sectional view showing an example of a combiner according to the present invention.

[FIG. 2] FIG. 2 is a diagram showing an example of installation of a head-up display device according to the present invention.

[FIG. 3] FIG. 3 is a diagram showing an example of installation of a head-up display device according to the present invention.

[FIG. 4] FIG. 4 is a diagram showing an example of installation of a head-up display device according to the present invention.

[FIG. 5] FIG. 5 is a schematic cross-sectional view showing a construction of Patent Literature 3.

[FIG. 6] FIG. 6 is a schematic cross-sectional view of each of the combiners of Example 5 and Comparative Examples 4 and 6 to 8.

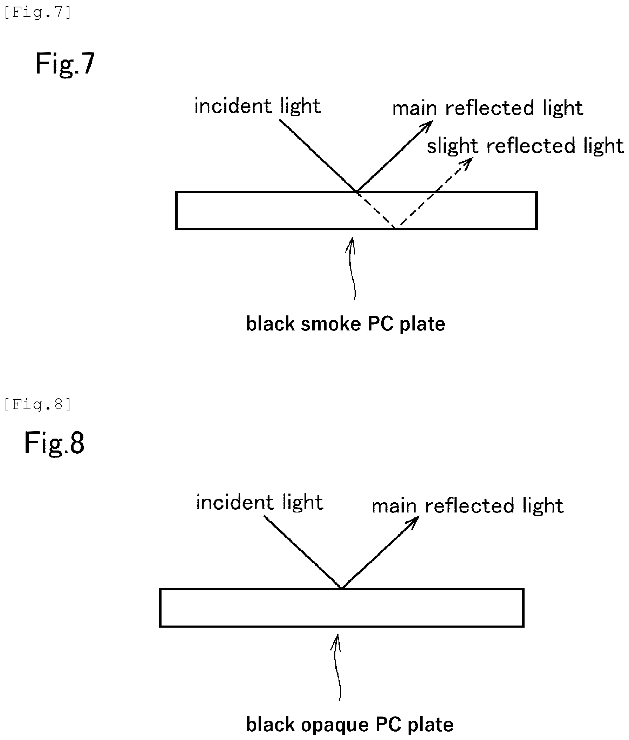

[FIG. 7] FIG. 7 is a schematic cross-sectional view of each of the combiners of Comparative Examples 1 and 2.

[FIG. 8] FIG. 8 is a schematic cross-sectional view of the combiner of Comparative Example 3.

Description of Embodiments

A first embodiment of the present invention is a reflective combiner for a head-up display device, the combiner comprising: a substrate (a); a reflective layer (b); and a translucent layer (c) having a thickness of 0.005 to 0.7 mm, wherein the reflectance of the combiner is 10% to 55% at four wavelengths of 400 nm, 500 nm, 600 nm, and 660 nm.

A second embodiment of the present invention is the reflective combiner for a head-up display device according to the first embodiment, wherein the transmittance of the combiner is 10% or less over the entire wavelength $\lambda$ range of 390 to 660 nm.

A third embodiment of the present invention is the reflective combiner for a head-up display device according to the first or second embodiment, wherein the transmittance of the combiner is 0.1% or less over the entire wavelength $\lambda$ range of 390 to 660 nm.

A fourth embodiment of the present invention is the reflective combiner for a head-up display device according to any one of the first to third embodiments, wherein the reflective layer (b) is an aluminum or aluminum alloy layer.

A fifth embodiment of the present invention is the reflective combiner for a head-up display device according to any one of the first to fourth embodiments, wherein a pencil hardness on a projection display surface is F or higher.

A sixth embodiment of the present invention is the reflective combiner for a head-up display device according to any one of the first to fifth embodiments, wherein the substrate (a) is made of a resin.

A seventh embodiment of the present invention is the reflective combiner for a head-up display device according to any one of the first to sixth embodiments, wherein the substrate (a) is made of a thermoplastic resin.

An eighth embodiment of the present invention is the reflective combiner for a head-up display device according to any one of the first to seventh embodiments, wherein the substrate (a) has a thickness of 0.5 to 10 mm.

A ninth embodiment of the present invention is the reflective combiner for a head-up display device according to any one of the first to eighth embodiments, wherein the reflective layer (b) has a thickness of 50 to 300 nm.

A tenth embodiment of the present invention is the reflective combiner for a head-up display device according to any one of the first to ninth embodiments, wherein the translucent layer (c) is a smoke coating, a smoke resin sheet, or a smoke resin film.

An eleventh embodiment of the present invention is the reflective combiner for a head-up display device according to the tenth embodiment, wherein the smoke coating has a thickness of 5 to 40 $\mu$m.

A twelfth embodiment of the present invention is the reflective combiner for a head-up display device according to the tenth embodiment, wherein the smoke resin sheet or the smoke resin film has a thickness of 10 to 700 $\mu$m.

A thirteenth embodiment of the present invention is a head-up display device, comprising the reflective combiner for a head-up display device according to any one of the first to twelfth embodiments.

<Overview of an Embodiment>

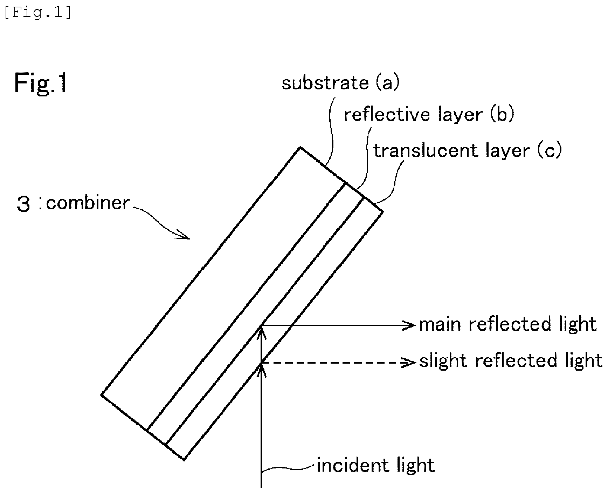

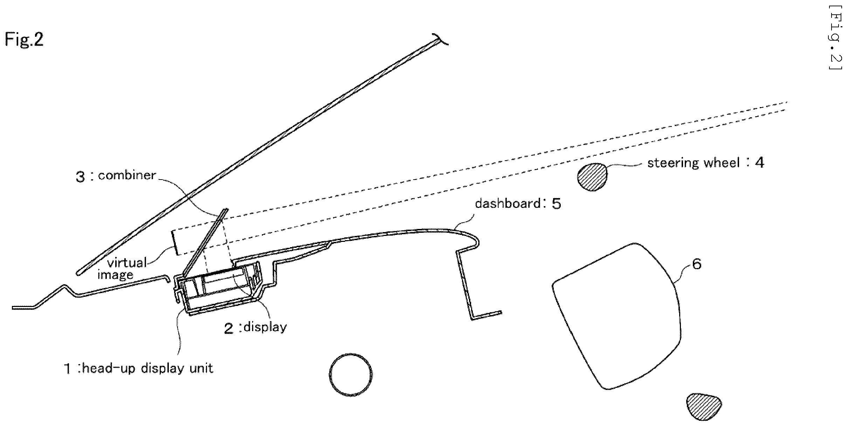

FIG. 1 shows an example construction of a combiner according to an embodiment of the present invention. FIGS. 2 through 4 show example constructions of a head-up display device using a combiner according to the present invention, for example, the one shown in FIG. 1.

As shown in FIGS. 2 through 4, in this embodiment the combiner is assumed to be used as a part of a head-up display device mounted in a vehicle.

In the example shown in FIG. 2, a head-up display unit 1, which is a part of the head-up display device, is disposed near a dashboard 5 of the vehicle. The head-up display unit 1 includes at least a display 2 inside. By allowing the combiner 3 to reflect an image displayed on the display 2, a passenger (driver) can view the image. Since an image is displayed through reflection, the passenger (driver) can see a virtual image far away by the distance between the display 2 and the combiner 3. An airbag device 6 is installed in a steering wheel 4.

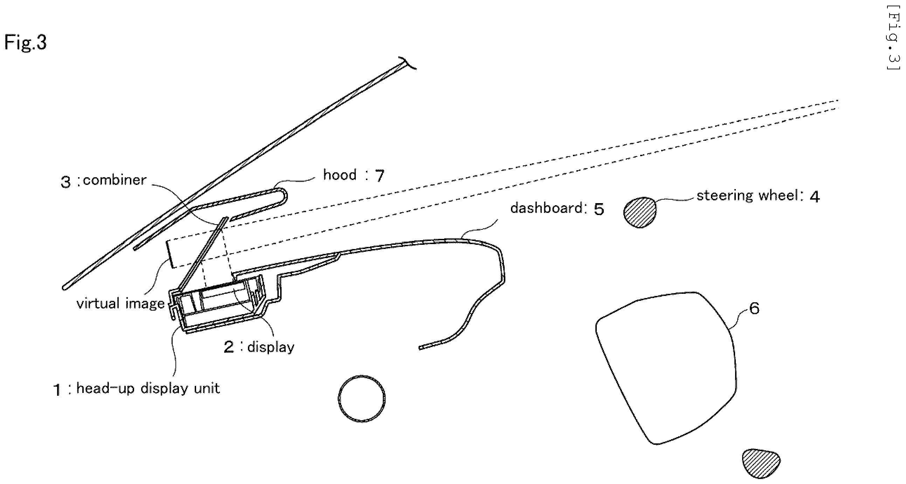

In the example shown in FIG. 3, the head-up display device is disposed at a position where a passenger (driver) can view the combiner from above the steering wheel 4, and a hood 7 is provided above the combiner to block external light.

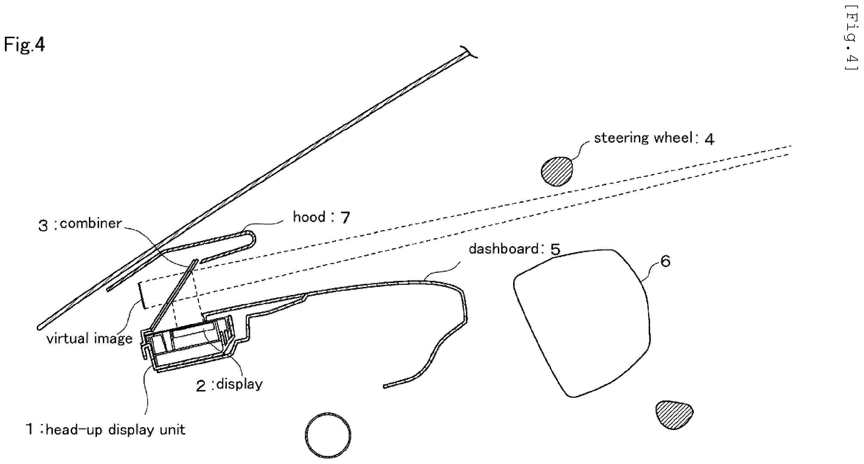

In the example shown in FIG. 4, the head-up display device is disposed at a position where a driver can view the combiner from inside the steering wheel.

<Construction>

As shown in FIG. 1, the combiner of the present invention includes at least a substrate (a), a reflective layer (b), and a translucent layer (c) having a thickness of 0.005 to 0.7 mm. In addition to the substrate (a), the reflective layer (b), and the translucent layer (c), the combiner may also include one, or two or more of an adhesive layer, a hard coating layer, an antireflection layer, a weather-resistant layer, a colorless transparent layer (transparent layer), etc.

<Material for Substrate (a)>

Examples of materials for the substrate include a resin, glass, a metal, and a ceramic, with a resin being preferred. A resin can be molded into a substrate of any shape or size by injection molding using a mold. Further, a resin has a lower density than glass or a metal, thus enabling a reduction in the weight of the device.

Resins are broadly classified into thermosetting resins and thermoplastic resins. Thermoplastic resins are preferred because they can be molded at low cost. Examples of typical thermoplastic resins include polycarbonate (PC), polymethyl methacrylate (PMMA, acrylic), acrylonitrile-butadiene-styrene (ABS), polystyrene (PS), polypropylene (PP), cycloolefin polymer (COP), and cycloolefin copolymers (COC) .

Examples of other thermoplastic resins include polyethylene, polyacetal, polybutylene terephthalate, polyethylene terephthalate (PET), polyethylene naphthalate, various polyamides, polyphenylene ether, modified polyphenylene ether, polyphenylene sulfide, polyether ether ketone, polyether ketone, polyphenylene, sulfide ketone, polyphenylene sulfide sulfone, polyether nitrile, aromatic polyester, liquid crystal polyester, polyarylate, polysulfone, polyether sulfone, polyetherimide (PEI), polyamideimide, polyimide, polyamino bismaleimide, polymethylpentene, fluororesin (polytetrafluoroethylene, tetrafluoroethylene-hexafluoropropylene-perfluoroalkoxy vinyl ether copolymer, tetrafluoroethylene-ethylene copolymer, polyvinylidene fluoride, tetrafluoroethylene-hexafluoropropylene copolymer, tetrafluoroethylene-perfluoroalkyl vinyl ether copolymers, and the like), but are not limited thereto.

These thermoplastic resins can be used alone or in a mixture of two or more.

Examples of the mixture include a blend of polybutylene terephthalate and polyethylene terephthalate, a blend of polyphenylene ether and polyamide, a blend of polyphenylene ether and polybutylene terephthalate, and the like.

The polycarbonate (PC) is not limited to a common aromatic polycarbonate made from bisphenol A as a main material; it is possible to use, for example, an aromatic polycarbonate made from another main material, an aliphatic polycarbonate, or an aromatic-aliphatic polycarbonate. A specific example is a polycarbonate comprising an ether diol, such as isosorbide, as a main component.

In particular, PC, PMMA, ABS, PS, and PP are preferred because they can be molded at low cost.

The use of PMMA, or a high-hardness PC having a pencil hardness of F or higher is preferred because of improved scratch resistance of the surface of the combiner.

When heat resistance is required, it is preferred to use heat-resistant ABS, polyarylate, PEI, COP, COC, or the like.

<Thickness of Substrate (a)>

The thickness of the substrate (a) is generally 0.5 to 10 mm.

A small thickness is advantageous in terms of weight reduction. However, if the thickness is too small, it is possible that due to insufficient rigidity, the shape of the combiner may be unstable, resulting in distortion of a display image. A large thickness is advantageous in terms of shape stability, but is disadvantageous in terms of increase in the weight of the combiner and increase in the material cost of the substrate (a).

<Shape of Substrate (a)>

In the substrate (a) according to the present invention, a portion onto which an image is projected and displayed has a generally flat plate-like shape. A flat plate-like shape is desirable for projection display. However, from the viewpoint of design and appearance, that portion of the substrate (a) may be curved to such a degree as not to affect projection display.

<Reflective Layer (b)>

The reflective layer (b) only needs to be able to optically reflect visible light, and its composition is not particularly limited. The reflective layer (b) may be a laminate of multiple films having different compositions.

<Material for Reflective Layer (b)>

A metal is generally used as a material for the reflective layer (b). The reflective layer may be an optical thin film consisting of multi-layer dielectric films; however, from industrial and cost viewpoints, the use of a metal is preferred because of a simpler production method or design of the reflective layer (b).

Examples of the metal include aluminum (Al), iron (Fe), cobalt (Co), chromium (Cr), nickel (Ni), copper (Cu), tin (Sn), indium (In), silver (Ag), platinum (Pt), gold (Au), and an alloy containing one, or two or more of them.

Among these, Al or its alloy, and Ag or its alloy are preferred because they have a high reflectance in the visible light wavelength range and can therefore make the reflectance of the combiner high. Al or its alloy is particularly preferred because it has a relatively low wavelength dependence of reflectance in the visible light wavelength range, and therefore has a small variation in reflectance at a particular wavelength, which enables easy adjustment of the color of the reflective surface of the combiner by the translucent layer (c). Al or its alloy is inexpensive as compared to Ag or an Ag alloy.

<Method for Forming Reflective Layer (b)>

Examples of methods for forming the reflective layer (b) include vacuum deposition, vacuum sputtering, plating, mirror printing and coating (painting).

The reflective layer (b) may also be formed by a method which involves bonding a film-shaped metal, which is to make the reflective layer (b), to the substrate (a) and to the translucent layer (c), or by a method which involves laminating the translucent layer (c) to a metal film e.g. by coating.

A silver printing ink, prepared by mixing and dispersing a metal powder, such as an aluminum powder or a silver powder, into a synthetic resin such as an acrylic resin, a urethane resin, or a polyester resin, for example, can be used as a printing ink in mirror printing to form the reflective layer (b).

Examples of usable printing methods using such a printing ink include screen printing, offset printing, gravure printing, and flexographic printing, with screen printing being preferred.

The reflective layer (b) may be formed on the substrate (a) or, when the translucent layer (c) is a film or sheet, may be formed on the surface of the film or sheet.

The reflective layer (b) is preferably formed by vacuum deposition or vacuum sputtering because a homogeneous and smooth reflective surface can be formed.

The reflective layer (b) is particularly preferably a metal film. In designing of a film construction prior to the formation of the film, a metal film can be designed to have a simpler construction as compared to a multi-layer oxide film, leading to a reduced cost of film-forming material and a shorter film-forming time.

The use of a metal having a high reflectance leads to a high reflectance of the combiner of the present invention. Conversely, the use of a metal having a low reflectance leads to a low reflectance of the combiner. It is therefore preferred to select a metal or its alloy, for use in the reflective layer, which can achieve a reflectance of 50% or more.

In the formation of a film by sputtering, the film formation rate can be made 10 nm/s or more, particularly 15 nm/s or more by setting a discharge power per unit area of a target to 25 $W/cm^2$ or more, particularly 40 $W/cm^2$ or more. Thus, sputtering is preferred because a film can be formed in a short time.

<Thickness of Reflective Layer (b)>

When vacuum deposition or vacuum sputtering is used to form the reflective layer (b), the thickness (film thickness) of the reflective layer (b) is preferably 50 to 300 nm, particularly preferably 90 to 150 nm, though the thickness may be set appropriately depending on the required characteristics.

When the film thickness is small, the reflective layer (b) is excellent in adhesion to the adjacent substrate (a) and to the adjacent translucent layer (c). However, if the film thickness is too small, incident light may pass through the reflective layer, resulting in a shortage of reflected light. When the film thickness is large, the reflective layer (b) is excellent in the stability of the reflectance for incident light. However, if the film thickness is too large, the production of the reflective layer (b) requires considerable time and cost. In addition, the reflective layer (b) is sometimes poor in adhesion to the adjacent layers. It is therefore preferred to select an appropriate thickness, which is neither too large nor too small, for the reflective layer (b).

In order to improve adhesion, a method of forming a primer layer, a method of performing a plasma treatment, or a method of performing both may be carried out in advance of the formation of the reflective layer (b) by a vacuum film-forming process. In particular, a method of performing a plasma treatment in a vacuum immediately before the formation of the reflective layer (b) by a vacuum film-forming process is preferred because the both steps can be carried out in the same vacuum.

When the reflective layer (b) is formed by plating or mirror printing, or by using a film-shaped metal (metal film), it is difficult to achieve a thickness of 1 um or less which is possible with the above-described vacuum film-forming process; therefore, the thickness is generally 1 um or more.

<Surface Roughness Ra of Reflective Layer (b)>

In order to provide a clear display image, the surface roughness Ra of the reflective layer (b) is preferably 100 nm or less, more preferably 10 nm or less. When the reflective layer (b) is formed on the substrate (a) or the translucent layer (c) by a vacuum film-forming process, the film-forming surface of the substrate (a) or the translucent layer (c) preferably has a surface roughness Ra of 100 nm or less, particularly 10 nm or less.

<Transmittance of Combiner>

Due to the presence of the reflective layer (b), the combiner of the present invention is opaque with a transmittance of preferably 10% or less, particularly preferably 0.1% or less in the wavelength $\lambda$ range of 390 to 660 nm.

<Translucent Layer (c)>

In the present invention, the translucent layer (c) is formed of a smoke coating (paint) using a coating resin, or of a smoke resin sheet, a smoke resin film, or the like.

<<Translucent Layer (c) made of Smoke Coating (Paint) Using Coating Resin>>

In one embodiment of the present invention, the translucent layer (c) is made of a smoke coating that has been formed using a coating resin.

• Coating method

A coating resin material can be applied by a known coating method such as a spin coating method, a dip coating method, a spraying method, a slide coating method, a bar coating method, a roll coating method, a gravure coating method, an inkjet method, a silk screen method, a die coating method, a flow coating method, or a case transfer method.

Among them, a spraying method, an inkjet method, a gravure coating method, and a silk screen method are preferred from the viewpoint of adjustment of the thickness of a coating layer and application of diverse coatings. For example, a coating resin material is preferably spray-coated using a robot arm-mounted sprayer or the like.

The thickness of a coating layer can be adjusted, for example, by adjustment of the amount of coating, adjustment of the number of coating operations, adjustment of the distance to an object to be coated, adjustment of the coating pattern, or adjustment of the moving speed of a discharge port. Such adjustment methods may be used singly or in a combination of two or more.

More specifically, for example, a robot arm-mounted sprayer is controlled by a computer: the operator inputs into the computer information on the amount of coating, the number of coating operations (number of repeated coatings), etc., for each coating area, according to the shape and size of a panel substrate to be coated, so that the thickness of a coating layer can be adjusted to a desired thickness.

·Coating resin material

While the coating resin material is not particularly limited, it is preferred to use a resin material which is used as a hard coating material.

Examples of the coating resin material include an ultraviolet (UV) curable resin material, a solvent drying/curing resin material, and a thermosetting resin material. However, other coating material(s) can also be used as appropriate.

The ultraviolet curable resin material may be a resin material containing a photopolymerizable compound, i.e., a compound having one or more photopolymerizable functional groups.

Upon polymerization of the photopolymerizable compound, it is irradiated by light, for example, visible light or ionizing radiation such as ultraviolet rays, X-rays, an electron beam, $\alpha$-rays, $\beta$-rays, and $\gamma$-rays.

The photopolymerizable compound may be a photopolymerizable monomer, a photopolymerizable oligomer or a photopolymerizable polymer having, in the molecule, a polymerizable unsaturated bond such as an acryloyl group or a methacryloyl group, a thiol group, an epoxy group, or an ethylenic double bond such as an allyl group.

For example, a photopolymerizable monomer can be used in combination with a photopolymerizable oligomer or a photopolymerizable polymer.

The photopolymerizable monomer may be a polyfunctional monomer having two (i.e., bifunctional) or more photopolymerizable functional groups.

Examples of the monomer include, diethylene glycol di(meth)acrylate, dipropylene glycol di(meth)acrylate, trimethylolpropane tri(meth)acrylate, tripropylene glycol di(meth)acrylate, pentaerythritol tri(meth)acrylate, pentaerythritol tetra(meth)acrylate, dipentaerythritol hexa(meth)acrylate, 1,6-hexanediol di(meth)acrylate, neopentyl glycol di(meth)acrylate, trimethylolpropane tri(meth)acrylate, ditrimethylolpropane tetra(meth)acrylate, dipentaerythritol penta(meth)acrylate, tripentaerythritol octa(meth)acrylate, tetrapentaerythritol deca(meth)acrylate, isocyanuric acid tri(meth)acrylate, isocyanuric acid di(meth)acrylate, polyester tri(meth)acrylate, polyester di(meth)acrylate, bisphenol di(meth)acrylate, diglycerin tetra(meth)acrylate, adamantyl di(meth)acrylate, isobornyl di(meth)acrylate, dicyclopentane di(meth)acrylate, tricyclodecane di(meth)acrylate, ditrimethylolpropane tetra(meth)acrylate, and those modified with PO (propylene oxide), EO (ethylene oxide), and the like.

As the photopolymerizable oligomer, a polyfunctional oligomer having two or more functionalities is preferable.

Examples of the oligomer include polyether (meth)acrylate, polyol (meth)acrylate, melamine (meth)acrylate, isocyanate (meth)acrylate, epoxy (meth)acrylate, polyester (meth)acrylate, urethane (meth)acrylate, polyester-urethane (meth)acrylate, and the like.

Examples of photopolymerizable polymers include polyurethane (meth)acrylate, polyisocyanate (meth)acrylate, polyester-urethane (meth)acrylate, polyepoxy (meth)acrylate, and the like.

The ultraviolet curable resin material may be a resin material containing a photopolymerization initiator which absorbs ultraviolet rays and is excited and activated to cause a polymerization reaction and cause a curing reaction of the ultraviolet curable resin.

Examples of the photopolymerization initiator include benzyl, benzophenone and its derivatives, thioxanthones, benzyl dimethyl ketals, $\alpha$-hydroxyalkylphenones, $\alpha$-hydroxyacetophenones, hydroxyketones, aminoalkylphenones, and acylphosphine oxides.

Among them, $\alpha$-hydroxyalkylphenones are preferred because they are unlikely to cause yellowing during curing and can provide a transparent cured product. Aminoalkylphenones are also preferred because they have a very high reactivity and can provide a cured product having excellent hardness.

The above-described photopolymerization initiators can be used singly or in a combination of two or more.

The photopolymerization initiator is preferably used in an amount of 0.1 to 5 parts by mass per 100 parts by mass of the curable resin.

In the case of an ultraviolet curable resin material, a cured coating layer can be formed, for example, by a method which involves applying the resin material to a surface to be coated, heating the resin material to evaporate a solvent and dry the resin material, and applying light such as UV rays to the resin material to polymerize (crosslink) a photopolymerizable compound, thereby curing the coating layer. However, the present invention is not limited to this method.

The solvent drying/curing resin material may be any resin material, such as a thermoplastic resin, that forms a film simply by evaporating a solvent which has been added to the resin upon coating to adjust the solid content.

The thermosetting resin material may be one containing a thermosetting resin such as a polyurethane resin, an epoxy resin, a phenol resin, a urea resin, a diallyl phthalate resin, a melamine resin, a guanamine resin, an unsaturated polyester resin, an amino-alkyd resin, a melamine-urea co-condensation resin, a silicon resin, or a polysiloxane resin.

Besides such a thermosetting resin, the thermosetting resin material may optionally contain, for example, a curing agent such as a crosslinking agent or a polymerization initiator, a polymerization accelerator, a solvent, a viscosity modifier, or an extender pigment.

As regards the curing agent, an isocyanate, an organic sulfonic acid, etc. are generally used for a polyester resin and a polyurethane resin, an amine is generally used for an epoxy resin, and a peroxide such as methyl ethyl ketone peroxide, and a radical initiator such as an azobisisobutyl ester are generally used for an unsaturated polyester resin.

Among the above-described coating resin materials, a resin material which, when coated on a polycarbonate substrate, has a pencil hardness of H or higher is preferred from the viewpoint of scratch resistance.

The wettability (JIS K 6768) of the coating resin material is preferably 22.6 dyn or less, and the viscosity (JIS K 56002-2, flow cup method) of the coating resin material is preferably 7.5 to 10.0 seconds.

From such viewpoints, the base resin of the coating resin material is preferably an acrylic resin or a urethane resin. An acrylic resin is particularly preferred from the viewpoint of surface hardness.

The coating resin material may optionally contain various known additives such as a dispersant, a surfactant, an antistatic agent, a silane coupling agent, a thickener, a coloring inhibitor, a colorant (pigment, dye), an antifoaming agent, a leveling agent, a flame retardant, an ultraviolet absorber, an adhesion promoter, a polymerization inhibitor, an antioxidant, a surface modifier, a lubricant, an antioxidant, and an impact modifier.

It is preferred to use an ultraviolet curing resin from the viewpoint of adjustment of the degree and rate of curing.

• Method of Translucent (Smoke) Coating

Smoke coating is possible by the use of a coating material containing a coating resin and a coloring additive. The coloring additive is preferably a black pigment. This is because the wavelength dependence of the transmittance is low in the visible light wavelength range, and therefore the wavelength dependence of the reflectance of the combiner can be made low. The low wavelength dependence of the reflectance of the combiner leads to good color reproducibility of a display image from a display. Examples of the black pigment include carbon black (in particular lamp black, vegetable black, furnace black, channel black, thermal black, acetylene black, charcoal black, etc.), graphite, triiron tetroxide (black iron oxide), a composite oxide of iron and manganese (Fe-Mn black), a composite oxide of iron, manganese and copper (Fe-Mn-Cu black), a composite oxide of cobalt, iron and chromium (Co-Fe-Cr black), a composite oxide of copper and chromium (Cu-Cr black), a composite oxide of copper, chromium and manganese (Cu-Cr-Mn black), a composite oxide of cobalt, iron and manganese (Co-Fe-Mn black), a lower titanium oxide (titanium black), and aniline black. Among them, a manganese/iron oxide (manganese ferrite), which is a composite oxide of iron and manganese and in which the iron element of black iron oxide is partially substituted, is preferred, but it is not limiting of the present invention.

The transmittance of the translucent layer (c) can be adjusted by adjusting the concentration of the black pigment and the thickness of the translucent layer. The reflectance of the combiner (consisting of the substrate (a), the reflective layer (b) and the translucent layer (c)) is determined from the transmittance of the translucent layer (c) and the reflectance of the reflective layer (b).

• Thickness of Translucent Layer (c) Made of Coating Resin Material

The thickness of the translucent layer (c) made of the coating resin material is preferably 5 to 40 um, more preferably 10 to 30 um, and particularly preferably 15 to 25 um.

If the thickness of the translucent layer (c) is too small, uneven film thickness called "yuzu peel" (also called orange peel), or uneven appearance is likely to occur undesirably. Further, if the thickness of the translucent layer (c) is too small, it is difficult to adjust the thickness to a predetermined value. In addition, the thickness tends to be uneven.

This may adversely affect the transmittance of the translucent layer (c) and the reflectance of the combiner.

On the other hand, if the thickness of the translucent layer (c) is too thick, the production of the translucent layer (c) requires considerable time and cost. In addition, poor curing or insufficient curing of the coating resin is likely to occur. Furthermore, there is a fear that the translucent layer (c) may easily peel off the reflective layer (b), or the translucent layer (c), together with the reflective layer (b), may easily peel off the substrate (a).

<<Translucent Layer (c) Made of Smoke Resin Sheet or Smoke Resin Film>>

In another embodiment of the present invention, the translucent layer (c) is made of a smoke resin sheet or a smoke resin film.

The thickness of the sheet or film needs to be 700 um or less. This is because if the sheet or film is thicker, double vision of a projected and reflected image will occur. While the lower limit of the thickness of the sheet or film is not particularly limited, the thickness is generally 10 um or more.

Examples of the resin of the sheet or film include, and not limited to, PC, PMMA, and PET.

The terms "resin sheet" and "resin film" are sometimes used differently depending on the thickness, but not in an established manner. According to JIS (Japanese Industrial Standards), Packaging-Vocabulary, a sheet is defined as having a thickness of 250 um or more, and a film is defined as having a thickness of less than 250 um. However, another value, such as 200 um, is often used conventionally as a border that distinguishes a sheet and a film. It should be understood that when a sheet or film is used as the translucent layer (c), the present invention is not limited to either one.

When the translucent layer (c) is a sheet or film, the reflective layer (b) can be formed on the sheet or film.

<Reflectance>

The reflectance of the combiner of the present invention will now be described.

The reflectance of a projection display area in the combiner of the present invention is preferably 10 to 55%, particularly preferably 25 to 45% at wavelengths $\lambda$ of 400, 500, 600, and 660 nm. If the reflectance is too low, a projected display will look dark. It is possible to increase the light output of a light source in order to make a projected display image bright. However, this undesirably causes an increase in power consumption and an increase in the temperature of the light source.

If the reflectance is too high, a projected display will be bright; however, it is possible that e.g. due to external light, background reflection may undesirably occur during light-on/light-off.

In the present invention, the ratio of the reflectance "R (400 nm)" at a wavelength $\lambda$ of 400 nm to the reflectance "R (660 nm)" at a wavelength $\lambda$ of 660 nm, "R (400 nm)/R (660 nm)", is preferably 0.5 to 2.0. If this ratio is too low, a projected display image will have a yellowish or reddish tint, that is, a warm tone. If this ratio is too high, a projected display image will have a bluish or purplish tint, that is, a cool tone.

<Transmittance>

The transmittance of a projection display area in the combiner of the present invention is preferably 10% or less, more preferably 1% or less, particularly preferably 0.1% or less in the entire wavelength $\lambda$ range of 390 to 660 nm. Such a low transmittance of the combiner can prevent an adverse effect on a display caused by light from the back surface of the combiner opposite to the display surface.

<Pencil Hardness (on Projection Display Surface)>

The pencil hardness of a projection display area in the combiner of the present invention is preferably F or higher from the viewpoint of scratch resistance.

Though not limiting, as described above, it is preferred to select a material, having a pencil hardness of F or higher, for the substrate (a) in order to improve scratch resistance.

It is particularly preferred to use a resin material, which is used as a hard coating material, as a material for the translucent layer (c).

A hard coating layer may be provided separately from the translucent layer (c).

<Method for Producing the Combiner>

Examples of methods for producing the combiner of the present invention include, and are not limited to, the following production methods A to E.

Production method A: The reflective layer (b) is formed on the substrate (a) by a vacuum film-forming process, e.g. sputtering, and the translucent layer (c) is coated thereon (corresponding to Examples 1 to 4).

Production method B: The reflective layer (b) is formed by a vacuum-forming process, e.g. sputtering, on a smoke resin sheet (or film) which is to make the translucent layer (c), and the surface of the reflective layer (b) is attached to the substrate (a), e.g. using an adhesive layer (corresponding to Example 5 and Comparative Examples 4 to 8) .

Production method C: An in-mold film, which is a multi-layer laminate including at least the translucent layer (c) and the reflective layer (b), is prepared, and the film is integrated with the substrate (a) by in-mold coating.

Production method D: The reflective layer (b) is formed on a colorless transparent sheet (film), and the translucent layer (c) is coated on the surface of the colorless transparent sheet (film), opposite to the surface on which the reflective layer (b) is formed, and the reflective layer (b) is attached to the substrate (a) e.g. using an adhesive layer. The order of formation of the reflective layer (b) and the translucent layer (c) may be reversed.

Production method E: The reflective layer (b) is mirror-printed on the substrate (a), and the translucent layer (c) is coated on the reflective layer (b).

EXAMPLES

The following examples illustrate the present invention in greater detail and are not intended to limit the scope of the invention; various applications are possible within the technical concept of the present invention.

<Measurement and Evaluation Methods>

The following measurement and evaluation methods were used in Examples and Comparative Examples.

<Reflectance>

Using a spectrophotometric colorimeter ("model number: CM-2600d", Konica Minolta Japan, Inc.), measurement of reflectance was performed by the specular component included (SCI) method.

This measuring device performs measurement in the wavelength range $\lambda$ of 360 to 740 nm at wavelength intervals of 10 nm.

<Brightness in Image Quality (Sensory Evaluation)>

In a 400-lux room (fluorescent lighting), "one white filled circle (white circle) with a diameter of 20 mm on a black background" was displayed on a display screen of a laptop computer, while a combiner sample was placed on a keyboard of the laptop computer. Light from the display screen was allowed to enter the combiner sample at an incident angle of 45°, and the image reflected on the combiner sample was visually observed from the 45° reflection angle direction to make a sensory evaluation of the brightness of the white circle.

A*: quite bright
A: good
B: somewhat dark, but at an acceptable level
C: dark

<Background Reflection in Image Quality (Sensory Evaluation)>

In a 400-lux room (fluorescent lighting), the same optical arrangement as in the sensory evaluation of brightness was used, except that no image was displayed on the display screen of the laptop computer, and instead a black resin plate (non-mirror black plate) with a rough surface, which assumed a black pseudo-background, was placed in contact with the display screen. The image of the black pseudo-background, reflected on a combiner sample, was visually observed to make a sensory evaluation of the degree of background reflection.

◎: good with no background reflection
∘: good with almost no background reflection
Δ: slight background reflection, but at an acceptable level
✕: some background reflection

<Double Vision (20 pt) in Image Quality (Sensory Evaluation)>

Using a laptop computer as in the brightness evaluation, a large number of "= (equal sign)" and "- (minus sign)" in white characters on a black background were displayed on the display screen of the laptop computer, and the image reflected on a combiner sample was visually observed from the 45° reflection angle direction to make a sensory evaluation of double vision of the reflected image.

In the MS Gothic font 20 pt (points), the line width of "=" and "-" is approximately 1/2 mm (= 0.5 mm), and the distance from the top to the bottom of the white character "=" is approximately 2 mm.

○: good with no double vision

Δ: slight blur, like double vision, was observed in the image, but at an acceptable level

Δ (yuzu peel): slight blur was observed, but at an acceptable level, in the image due to slight "yuzu peel" of the surface of a smoke hard coating layer

×: unacceptable because of double vision

××: unacceptable because of clearer double vision than × ×××: unacceptable because of clearer double vision than ××

<Double Vision (10 pt) in Image Quality (Sensory Evaluation)>

Using a laptop computer as in the brightness evaluation, a large number of "= (equal sign)" and "- (minus sign)" in white characters on a black background were displayed on the display screen of the laptop computer, and the image reflected on a combiner sample was visually observed from the 45° reflection angle direction to make a sensory evaluation of double vision of the reflected image based on the same evaluation criteria as those described above.

In the MS Gothic font 10 pt, the line width of "=" and "-" is approximately 1/4 mm (= 0.25 mm), and the distance from the top to the bottom of the white character "=" is approximately 1 mm.

<Pencil Hardness (on Projection Display Surface)>

A pencil hardness test was performed in accordance with the following standard.
Japanese Industrial Standards JIS K 5600-5-4:1999 (ISO/DIS 15184:1996)

<Transmittance (Evaluation of the Property of Translucent Layer (c))>

Somewhat different measurement methods can be applied depending on the method of formation and the thickness of the translucent layer (c), though the methods are essentially similar. The respective methods are as follows.

<<In the Case of Translucent Layer (c) Which Is a Smoke Coating (Paint) Using a Coating Resin>>

Under the same conditions as in coating on the reflective layer (b), smoke coating was performed on a 1 mm thick colorless transparent PC plate. The transmittance of the coated plate was measured for laser light at a wavelength $\lambda$ of 660 nm using a photodiode.
Thus, transmittance measurement was performed on the coated plate in which the colorless transparent PC plate overlaps the smoke coating layer corresponding to the translucent layer (c).
The smoke coating layer is as thin as about 5 to 40 um; therefore, it is practically difficult to measure the transmittance of this layer alone. That is why the measurement is performed in the above-described manner together with the colorless transparent PC plate.
A coated plate consisting of the reflective layer (b) and a smoke coating layer has a high reflectance when the smoke coating has been performed under the same conditions as in the case of a high transmittance. Conversely, a coated plate consisting of the reflective layer (b) and a smoke coating layer has a low reflectance when the smoke coating has been performed under the same conditions as in the case of a low transmittance.
The transmittance of the 1 mm thick colorless transparent PC plate at a wavelength $\lambda$ of 660 nm is 90%.
If the transmittance of only the smoke coating layer, corresponding to the translucent layer (c), cannot be measured, it poses no problem for the formation of the translucent layer (c), consisting of the smoke coating layer, on the reflective layer (b).
It is to be noted in this regard that after performing smoke coating on the colorless transparent PC plate, the transmittance of the coated plate may be measured. Separately, after performing smoke coating on the reflective layer (b) under the same conditions, the reflectance of the coated plate may be measured. The correlation between the transmittance and the reflectance may be found out in advance.

<<In the Case of Using a Smoke Sheet as Translucent Layer (c) >>

When a smoke sheet or plate was used as the translucent layer (c), its thickness was 0.5 mm or more in the relevant examples and comparative examples; therefore, the transmittance of the smoke sheet or plate alone was directly measured for laser light at a wavelength $\lambda$ of 660 nm using a photodiode.

Transmittance measurements, measured at a wavelength $\lambda$ of 500 nm using a spectrophotometer, are also described in Table 1 or 2.

When the reflective layer (b) is formed on a smoke sheet having a high transmittance, the reflectance of light, which has entered the smoke sheet corresponding to the translucent layer (c), is high. Conversely, when the reflective layer (b) is formed in the same manner on a smoke sheet having a low transmittance, the reflectance of light, which has entered the smoke sheet corresponding to the translucent layer (c), is low.

<Transmittance (Evaluation of the Property of Reflective Combiner)>

The transmittance of a combiner was measured using a spectrophotometer in the wavelength $\lambda$ range of 390 to 660 nm at 1 nm intervals, and the maximum transmittance is described in Table 1 or 2.

<Thickness of Translucent Layer (c)>

The following measurement methods were used depending on the method of formation and thickness of the translucent layer (c).

<<In the Case of Translucent Layer (c) Which Is a Smoke Coating (Paint) Using a Coating Resin>>

For the determination of the thickness, a glass plate was placed on the reflective layer (b) or on the 1 mm thick colorless transparent PC plate used for the transmittance measurement, and a part of the glass plate was masked by tape. After carrying out smoke coating on the glass plate under the same conditions, the glass plate was taken out, and the difference in level, or the height difference between the smoke-coated portion and the masked non-coated portion of the glass plate was measured using a constant-pressure thickness measuring device (resolution 0.001 mm = 1 $\mu$m).

The measurement of the thickness may be carried out using a micrometer, a contact 3D shape measuring machine, a non-contact 3D measuring machine, a contact profiler, a contact surface roughness tester, a laser microscope, or the like as long as the measurement can be performed at a resolution of about 0.001 mm or at a higher resolution.

A commercially available cover glass commonly used in optical microscopy was used as the glass plate. Alternatively, a commercially available slide glass or a silicon semiconductor substrate may be cut to an appropriate size and used as the glass plate.

In the smoke coating process, it is essential to use a plate which does not melt or deform and which has adhesion to a smoke coating to such an extent as not to pose an obstacle to the thickness measurement.

<<In the Case of Using a Smoke Sheet as Translucent Layer (c) >>

Before forming the reflective layer (b) on a smoke sheet, the thickness of only the smoke sheet was measured by a caliper (resolution: 0.01 mm). The thickness may be measured using a constant-pressure thickness measuring device, a micrometer, or the like.

<Other Methods for Measuring the Thickness of Translucent Layer (c)>

In order to estimate the thickness of the translucent layer (c), it may be subjected to cross-sectional observation together with the reflective layer (b) or the substrate (a).

A means for the cross-sectional observation may be appropriately selected depending on the required magnification, etc. Examples include an optical microscope, a polarizing microscope, a laser microscope, a scanning electron microscope (SEM), and a transmission electron microscope (TEM).

[Example 1]

A black opaque PC plate having a thickness of 1 mm was prepared as a substrate (a). To form a reflective layer (b) on the substrate (a), the substrate (a) was subjected to a plasma treatment, followed by aluminum sputtering. A smoke hard coating at a thickness of 10 um (= 0.010 mm) was applied as a translucent layer (c) to the reflective layer (b) .

A smoke hard coating is a coating which has both an optical smoke function and a scratch-resistant hard coating function.

Table 1 shows the measurement and evaluation results of the reflectance, image quality, and pencil hardness of the plate obtained. The thickness of the smoke hard coating was estimated in advance of the application of the smoke hard coating. Further, the smoke hard coating was applied to a colorless transparent PC plate, and the transmittance of the coated plate was measured.

[Example 2]

The procedure of Example 1 was repeated except that the thickness of the smoke hard coating as the translucent layer (c) was changed to 20 um (= 0.020 mm). The measurement and evaluation results are shown in Table 1.

[Example 3]

The procedure of Examples 1 and 2 was repeated except that the type of the coating resin material forming the translucent layer (c) was changed, and the thickness of the translucent layer (c) was changed to 15 um. The measurement and evaluation results are shown in Table 1.

[Example 4]

The procedure of Example 3 was repeated except that the thickness of the translucent layer (c) was changed to 10 um. The measurement and evaluation results are shown in Table 1.

[Example 5]

A smoke PC plate (sheet) having a thickness of 0.5 mm (transmittance 57% at a wavelength $\lambda$ of 660 nm) was prepared as a translucent layer (c). To form a reflective layer (b) on the translucent layer (c), the translucent layer (c) was subjected to a plasma treatment, followed by aluminum sputtering. The reflective layer (b)-side surface of the resulting plate was attached to a 1 mm thick black opaque PC plate which had been prepared as a substrate (a). The measurement and evaluation results are shown in Table 1.

[Comparative Example 1]

The same measurements and evaluations were performed on a 1 mm thick black smoke PC plate (transmittance 46% at a wavelength $\lambda$ of 660 nm). The results are shown in Table 2.

[Comparative Example 2]

The same measurements and evaluations were performed on a 1 mm thick black smoke PC plate (transmittance 19% at a wavelength $\lambda$ of 660 nm). The results are shown in Table 2.

[Comparative Example 3]

The same measurements and evaluations were performed on a 1 mm thick black opaque PC plate (which does not transmit visible light at all). The results are shown in Table 2.

[Comparative Example 4]

The procedure of Example 5 was repeated except that the black smoke PC plate of Comparative Example 1 was used as a translucent layer (c). The measurement and evaluation results are shown in Table 2.

[Comparative example 5]

The procedure of Example 5 was repeated except that the black smoke PC plate of Comparative Example 2 was used as a translucent layer (c). The measurement and evaluation results are shown in Table 2.

[Comparative example 6]

The procedure of Example 5 was repeated except that a 1 mm thick black smoke high-hardness PC plate (transmittance 75% at a wavelength λ of 660 nm) was used as a translucent layer (c). The measurement and evaluation results are shown in Table 2.

[Comparative Example 7]

The procedure of Example 5 was repeated except that a 2 mm thick black smoke high-hardness PC plate (transmittance 64% at a wavelength λ of 660 nm) was used as a translucent layer (c). The measurement and evaluation results are shown in Table 2.

[Comparative example 8]

The procedure of Example 5 was repeated except that a 3 mm thick black smoke high-hardness PC plate (transmittance 54% at a wavelength λ of 660 nm) was used as a translucent layer (c). The measurement and evaluation results are shown in Table 2.

[Comparative Example 9]

The procedure of Example 2 was repeated except that the coating resin material forming the translucent layer (c) was changed to one different from those of Examples 1 to 4. The measurement and evaluation results are shown in Table 2.

[Table 1]

| | | Example 1 | Example 2 | Example 3 | Example 4 | Example 5 |
|---|---|---|---|---|---|---|
| Method | | Smoke coating A on sputtered reflective film | | Smoke coating B on sputtered reflective film | | Sputtered reflective film on the back of smoke plate |
| Substrate (a) | Generic term | Black PC | | | | Black PC |
| Reflective layer (b) | Generic term | Sputtered aluminum film | | | | Sputtered aluminum film |
| Translucent layer (c) | Generic term | Smoke hard coating (SHC) Type-A | | Smoke hard coating (SHC) Type-B | | Black smoke PC (transmittance: high) |
| | Thickness [mm] | 0.010 | 0.020 | 0.015 | 0.010 | 0.5 |
| Transmittance, T [%] (property of translucent layer (c)) | SHC on transp. PC λ = 660 nm | 57 | 38 | 55 | 67 | - |
| | Only smoke plate, λ = 500 nm | - | - | - | - | 53 |
| | Only smoke plate, λ = 660 nm | - | - | - | - | 57 |
| Reflectance, R [%] (measurement: CM-2600d) | λ = 400 nm | 37 | 21 | 37 | 46 | 39 |
| | λ = 500 nm | 42 | 24 | 43 | 52 | 33 |
| | λ = 600 nm | 38 | 20 | 39 | 49 | 30 |
| | λ = 660 nm | 38 | 20 | 40 | 50 | 38 |

(continued)

|  |  | Example 1 | Example 2 | Example 3 | Example 4 | Example 5 |
|---|---|---|---|---|---|---|
| Transmittance of the entire reflective combiner, T_all [%] | Max. in the λ range of 390-660 nm | 0 | 0 | 0 | 0 | 0 |
| Image quality | Brightness | A | B | A | A* | A |
|  | Background reflection | ○ | ○ | ○ | Δ | ○ |
|  | Double vision (20 pt) | ○ | ○ | ○ | ○ | ○ |
|  | Double vision (10 pt) | Δ (yuzu peel) | ○ | ○ | Δ (yuzu peel) | Δ |
| Pencil hardness |  | F-H | H-2H | H-2H | F-H | 3B |

[Table 2]

| | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|
| Method | | Smoke plate (only) | | Black PC (only) | Sputtered reflective film on the back of smoke plate | | | | | Smoke coating Con sputtered reflective film |
| Substrate (a) | Generic term | Black PC | | Black PC | Black PC | | Black PC | | | Black PC |
| Reflective layer (b) | Generic term | None | | None | Sputtered aluminum film | | | | | Sputtered aluminum film |
| Translucent layer (c) | Generic term | Black smoke PC (transmittance: medium) | Black smoke PC (transmittance: low) | None | Black smoke PC (transmittance: medium) | Black smoke PC (transmittance: low) | Black smoke high-hardness PC (transmittance: depending on thickness) | | | Smoke hard coating (SHC) Type-C |
| | Thickness [mm] | 1 | 1 | None | 1 | 1 | 1 | 2 | 3 | 0.020 |
| Transmittance, T [%] (property of translucent layer (c)) | SHC on transp. PC $\lambda$ = 660 nm | - | - | None | - | - | - | - | - | 78 |
| | Only smoke plate, $\lambda$ = 500nm | 42 | 16 | None | 42 | 16 | 70 | 56 | 45 | - |
| | Only smoke plate, $\lambda$ = 660 nm | 46 | 19 | None | 46 | 19 | 75 | 64 | 54 | - |
| Reflectance, R [%] (measurement: CM-2600d) | $\lambda$ = 400 nm | 8 | 6 | 6 | 28 | 10 | 33 | 18 | 12 | 54 |
| | $\lambda$ = 500 nm | 7 | 6 | 6 | 22 | 7 | 52 | 35 | 25 | 63 |
| | $\lambda$ = 600 nm | 6 | 6 | 6 | 19 | 7 | 51 | 34 | 24 | 62 |
| | $\lambda$ = 660 nm | 7 | 6 | 5 | 25 | 9 | 59 | 44 | 33 | 62 |
| Transmittance of the entire reflective combiner, T_all [%] | Max. in the $\lambda$ range of 390-660 nm | 50 | 25 | 0 | 0 | 0 | 0 | 0 | 0 | 0 |

EP 4 451 040 A1

18

| | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|
| Image quality | Brightness | C | C | C | B | C | A* | A | B | A* |
| | Background reflection | ◎ | ◎ | ◎ | ○ | ◎ | Δ | ○ | ○ | × |
| | Double vision (20 pt) | ○ | ○ | ○ | × | ○ | Δ | × | ×× | ○ |
| | Double vision (10 pt) | ○ | ○ | ○ | × | ○ | × | ×× | ××× | ○ |
| Pencil hardness | | 3B | 3B | 3B | 3B | 3B | F | F | F | H-2H |

[Discussion]

The data in Tables 1 and 2 indicates the following.

The combiners of Comparative Examples 1 to 3 and 5 were good in double vision, but were evaluated as dark in the brightness test. This is because of their low reflectance.

The combiners of Comparative Examples 4 and 6 to 8 were acceptable or good in brightness. However, double vision occurred in the comparative combiners. This is because the thickness of the translucent layer (c) is 1 mm or more, which causes misalignment between reflected light from the front surface of the black smoke sheet and reflected light from the back surface.

The combiner of Comparative Example 9 was good both in double vision and in brightness. However, background reflection occurred in the comparative combiner. This is because of its too-high reflectance.

In contrast, according to the present invention, it is possible to produce a combiner which, by inclusion of the reflective layer (b) and the translucent layer (c) having a thickness of 0.7 mm or less, can achieve high brightness and can avoid double vision as indicated by the data for Examples 1 to 5.

Although the present invention has been described in detail by way of the specific modes, it is apparent for those skilled in the art that various changes can be made without departing from the spirit and scope of the present invention.

The present application is based on Japanese Patent Application No. 2021-202695 filed on December 14, 2021, the entire contents of which are incorporated herein by reference.

References Signs List

1 head-up display unit
2 display
3 combiner
4 steering wheel
5 dashboard
6 airbag device
7 hood
(a) substrate
(b) reflective layer
(c) translucent layer
(d) adhesive layer

**Claims**

1. A reflective combiner for a head-up display device, the combiner comprising:

   a substrate (a);
   a reflective layer (b); and
   a translucent layer (c) having a thickness of 0.005 to 0.7 mm,
   wherein a reflectance of the combiner is 10% to 55% at four wavelengths of 400 nm, 500 nm, 600 nm, and 660 nm.

2. The reflective combiner for a head-up display device according to claim 1, wherein a transmittance of the combiner is 10% or less over an entire wavelength λ range of 390 to 660 nm.

3. The reflective combiner for a head-up display device according to claim 1 or 2, wherein the reflective layer (b) is an aluminum or aluminum alloy layer.

4. The reflective combiner for a head-up display device according to any one of claims 1 to 3, wherein a pencil hardness on a projection display surface is F or higher.

5. A head-up display device comprising the reflective combiner for a head-up display device according to any one of claims 1 to 4.

[Fig.1]

# Fig.1

substrate (a)

reflective layer (b)

translucent layer (c)

3 : combiner

→ main reflected light

⇢ slight reflected light

incident light

Fig.2

3 : combiner

virtual image

1 :head-up display unit

2 :display

steering wheel : 4

dashboard: 5

6

[Fig. 2]

EP 4 451 040 A1

[Fig.3]

Fig.3

3 : combiner

hood : 7

dashboard: 5

steering wheel: 4

virtual image

2 : display

6

1 : head-up display unit

[Fig.4]

Fig.4

steering wheel: 4

dashboard: 5

hood: 7

3 :combiner

virtual image

2 :display

1 :head-up display unit

6

[Fig.5]

Fig.5

combiner

$\left(\begin{array}{l}\text{black plate}\\\text{or}\\\text{black smoke plate}\end{array}\right)$

slight reflected light
( only for black smoke plate )

main reflected light

incident light

[Fig.6]

Fig.6

incident light    slight reflected light
main reflected light

translucent layer (c)

reflective layer (b)

adhesive layer (d)

substrate (a)

[Fig.7]

# Fig.7

incident light     main reflected light

slight reflected light

**black smoke PC plate**

[Fig.8]

# Fig.8

incident light     main reflected light

**black opaque PC plate**

## INTERNATIONAL SEARCH REPORT

| | International application No. |
|---|---|
| | **PCT/JP2022/042041** |

**A. CLASSIFICATION OF SUBJECT MATTER**

*G02B 27/01*(2006.01)i
FI:   G02B27/01

According to International Patent Classification (IPC) or to both national classification and IPC

**B. FIELDS SEARCHED**

Minimum documentation searched (classification system followed by classification symbols)

G02B27/00-30/60,B60K35/00-37/06,G09F9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-146666 A (DAINIPPON PRINTING CO LTD) 20 September 2018 (2018-09-20) paragraphs [0012], [0026]-[0029], [0049], [0057]-[0065], [0117], fig. 7 | 1-5 |
| X | JP 2002-182305 A (SHIMADZU CORP) 26 June 2002 (2002-06-26) paragraphs [0001]-[0004], [0013]-[0022], fig. 1, 3 | 1-5 |
| X | JP 2014-52555 A (DAINIPPON PRINTING CO LTD) 20 March 2014 (2014-03-20) paragraphs [0013], [0020]-[0045], fig. 2 | 1-5 |
| A | CN 107045199 A (SUNNIC TECH & MERCHANDISE INC; XINHUA SCIENCE AND TECH CO LTD) 15 August 2017 (2017-08-15) entire text, fig. 2 | 1-5 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 December 2022** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/042041**

| Patent document cited in search report | | | Publication date (day/month/year) | Patent family member(s) | Publication date (day/month/year) |
|---|---|---|---|---|---|
| JP | 2018-146666 | A | 20 September 2018 | (Family: none) | |
| JP | 2002-182305 | A | 26 June 2002 | (Family: none) | |
| JP | 2014-52555 | A | 20 March 2014 | (Family: none) | |
| CN | 107045199 | A | 15 August 2017 | TW 201728958 A | |

Form PCT/ISA/210 (patent family annex) (January 2015)

**EP 4 451 040 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H811580 A
- JP 6549817 B
- JP 6300738 B
- JP 2021202695 A